# EUROPÄISCHE PATENTSCHRIFT

(11) **EP 1 446 306 B1**
(45) Veröffentlichungstag und Bekanntmachung des Hinweises auf die Patenterteilung: **15.11.2006**
(21) Anmeldenummer: 02785394.4
(22) Anmeldetag: 19.11.2002
(51) Int. Cl.: B60N 2/30, B60N 2/16, B60N 2/20

(54) **EINSTELLER FÜR EINEN FAHRZEUGSITZ**
ADJUSTER FOR A VEHICLE SEAT
SYSTEME DE REGLAGE POUR SIEGE DE VEHICULE

(30) Priorität: 22.11.2001 DE 10157211
(43) Veröffentlichungstag der Anmeldung: 18.08.2004
(73) Patentinhaber: KEIPER GmbH & Co. KG, 67657 Kaiserslautern (DE)
(72) Erfinder: PETRY, Markus, 67240 Bobenheim-Roxheim (DE)
(74) Vertreter: Patentanwälte Hosenthien-Held und Dr. Held
(86) Internationale Anmeldenummer: PCT/EP2002/012926
(87) Internationale Veröffentlichungsnummer: WO 2003/043848

(56) Entgegenhaltungen:
- EP-A- 0 516 593
- WO-A-03/004306
- DE-A- 3 820 986
- DE-A- 19 648 974
- US-A- 5 052 748
- US-A- 5 383 699
- US-A- 6 000 742

## Beschreibung

Die Erfindung betrifft einen Einsteller für einen Fahrzeugsitz, insbesondere für einen Kraftfahrzeugsitz, mit den Merkmalen des Oberbegriffs des Anspruches 1 (s. zum Beispiel US-A-5 052 748).

Es sind verschiedene Einsteller dieser Art bekannt, welche beispielsweise zum Schwenken der Lehne, als Höheneinsteller oder zum Übergang in eine flache Bodenstellung dienen. Die Gebrauchsstellung und die Nichtgebrauchsstellung sind durch Verriegelungsvorrichtungen gesichert. In der Praxis bleiben, beispielsweise hinsichtlich der Bauteile-Anzahl und damit der Herstellungskosten, noch Wünsche übrig. In der e.g. US 5,052,748 A wird daher ein Einsteller vorgeschlagen, mittels dessen die Lehne von einer aufrechten Gebrauchsstellung in eine flache Nichtgebrauchsstellung geklappt werden kann, wobei sie in beiden Stellung durch eine einzelne, schwenkbar gelagerte Klinke gesichert wird, die mit einem lehnenfesten Verriegelungselement mit zwei Rasten zusammenwirkt. In der EP 0 516 593 A1 ist ein Fahrzeugsitz beschrieben, dessen Lehne mittels zweier Bolzen an einer feststehenden Platte mit zwei S-förmigen Kurvenbahnen festlegbar und entlang dieser bewegbar ist. Damit kann die Lehne verschieden geneigte Stellungen in verschiedenen Höhen einnehmen, ohne dass eine Lehnenschwenkachse definiert ist.

Der Erfindung liegt die Aufgabe zu Grunde, einen Einsteller der eingangs genannten Art zu verbessern. Diese Aufgabe wird erfindungsgemäß durch einen Einsteller mit den Merkmalen des Anspruches 1 gelöst. Vorteilhafte Ausgestaltungen sind Gegenstand der Unteransprüche.

Mit der schwenkbar am ersten Einstellerteil gelagerten Klinke, welche zum Verriegeln des Einstellers mit wenigstens einem einzelnen Verriegelungselement des zweiten Einstellerteils zusammenwirkt, steht eine einfache Verriegelungsvorrichtung zur Verfügung. Indem die Klinke sowohl in der Gebrauchsstellung als auch in der Nichtgebrauchsstellung dieselbe, schließende Position einnimmt und den Einsteller verriegelt, kann ein und dieselbe Verriegelungsvorrichtung für den Einsteller verwendet werden. Dies reduziert die Anzahl der Bauteile und damit die Herstellungskosten. Für die verschiedenen möglichen Stellungen des Fahrzeugsitzes und zur Abstimmung auf die Anordnung und Geometrie der Bauteile weist die Klinke zwei Mäuler auf, die dann wenigstens eines der Verriegelungselemente umschließen. Die Mäuler sind bezüglich der Schwenkbewegung der Klinke in die gleiche Richtung geöffnet, so dass die einheitliche schließende Position der Klinke einfacher erreicht werden kann. Diese Vorteile werden noch deutlicher, wenn die Klinke sowohl in der Gebrauchsstellung als auch in der Nichtgebrauchsstellung durch dieselben Sicherungselemente gesichert und/oder durch dasselbe Betätigungselement entriegelt wird, was zudem die Bedienbarkeit vereinfacht und verbessert. Die Sicherungselemente können zur Sicherung der schließenden Position der Klinke und zum Toleranzausgleich vorgesehen sein, wobei vorzugsweise dieselben Sicherungselemente in allen schließenden Positionen der Klinke wirksam sind, d.h. unabhängig von der Stellung des Fahrzeugsitzes und damit bei allen Verriegelungsmöglichkeiten des Einstellers.

Die Begriffe Gebrauchsstellung und Nichtgebrauchsstellung beziehen sich auf die Einsitzmöglichkeit. Dies schließt nicht aus, dass in der Nichtgebrauchsstellung Ladung auf die vorgeklappte Rückenlehne des Fahrzeugsitzes gepackt werden kann. Der Einsteller kann bei allen Fahrzeugsitzen verwendet werden, die als Ganzes oder deren Rückenlehnen jeweils in besondere Stellungen klappbar sind, beispielsweise der ganze Fahrzeugsitz in eine flache Bodenstellung oder Packagestellung bzw. die Rückenlehne in eine nach vorne geklappte Tischstellung, eine nach hinten geneigte oder flach geklappte Liegestellung oder eine nach vorne geklappte, freigeschwenkte Stellung. Der erfindungsgemäße Einsteller kann auch mehrmals mit jeweils unterschiedlichem Einsatzzweck im Fahrzeugsitz vorgesehen sein.

Für die verschiedenen möglichen Stellungen des Fahrzeugsitzes sind vorzugsweise eine entsprechende Anzahl von Verriegelungselementen vorgesehen, beispielsweise Bolzen, die jeweils mit den Mäulern derselben Klinke zusammenwirken. Zur Vereinfachung der Bauteilbewegung sind die Mäuler vorzugsweise auf verschiedenen Seiten an der Klinke angeordnet. Statt der Mäuler können auch Haken, Nasen oder dergleichen vorgesehen sein. Die Verriegelungselemente sind als Einzelelemente gedacht, nicht als unterschiedliche Bereiche einer langgestreckten Verzahnung oder dergleichen. Vorzugsweise können die Verriegelungselemente die Klinke in ihre schließende Position bewegen, was die Anzahl der gegenseitigen Federbelastungen reduziert und damit die Herstellung vereinfacht.

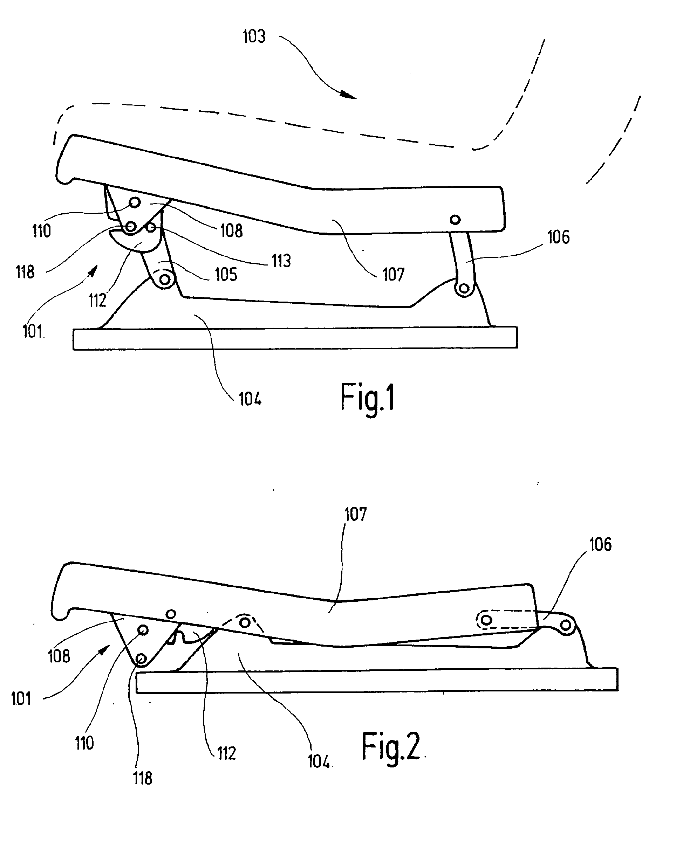

Im folgenden ist die Erfindung anhand zweier in der Zeichnung dargestellten Ausfiihrungsbeispiele näher erläutert. Es zeigen
- Fig. 1: eine schematische Darstellung des ersten Ausführungsbeispiels in einer Gebrauchsstellung des angedeuteten Fahrzeugsitzes,
- Fig. 2: eine Darstellung analog Fig. 1 in einer Nichtgebrauchsstellung des Fahrzeugsitzes,
- Fig. 3: eine teilweise geschnitten dargestellte Teilansicht des ersten Ausfiihrungsbeispiels entsprechend Fig. 1,
- Fig. 4: eine teilweise geschnitten dargestellte Teilansicht des ersten Ausfiihrungsbeispiels entsprechend Fig. 2,
- Fig. 5: eine schematische Darstellung des zweiten Ausführungsbeispiels in einer Gebrauchsstellung des Fahrzeugsitzes, und
- Fig. 6: eine Darstellung analog Fig. 5 in einer Nichtgebrauchsstellung, in welcher die Rückenlehne eine Tischstellung einnimmt.

Im ersten Ausführungsbeispiel ist ein Einsteller 101 als Sitzgestell eines Fahrzeugsitzes 103 in einer hinteren Sitzreihe eines Kraftfahrzeuges, beispielsweise eines Vans, vorgesehen. Der Einsteller 101 weist in Fahrtrichtung auf beiden Seiten des Fahrzeugsitzes 103 jeweils einen mit der Fahrzeugstruktur verbundenen Fußbereich 104, eine am Fußbereich 104 vorne angelenkte, vordere Schwinge 105 als ein erstes Einstellerteil, eine am Fußbereich 104 hinten angelenkte, hintere Schwinge 106, eine Koppel 107, die mit ihrem hinteren Ende an der hinteren Schwinge 106 angelenkt ist, und ein am vorderen Ende der Koppel 107 fest angebrachtes, nach unten weisendes Adaptionsteil 108 als ein zweites Einstellerteil auf, welches an der vorderen Schwinge 105 mittels eines Einstellerbolzens 110 angelenkt ist. Die beiden Koppeln 107 sind miteinander zu einem Sitzrahmen verbunden, welcher die Sitzschale zur Aufnahme des Sitzpolsters trägt.

Der Fahrzeugsitz 103 ist mittels des Einstellers 101 zwischen einer Gebrauchsstellung, welche zum Einsitzen geeignet ist und sich durch im wesentlichen aufrechte Schwingen 105 und 106 auszeichnet, und einer flachen Bodenstellung als Nichtgebrauchsstellung überführbar, welche sich durch eine möglichst gute Annäherung der Koppel 107 an den Fußbereich 104 auszeichnet.

Zwischen dem Adaptionsteil 108 und der vorderen Schwinge 105 ist ein Deckblech 112 angeordnet, welches mit der vorderen Schwinge 105 fest verbunden ist, so daß ein wenigstens teilweise geschlossener Einbauraum gebildet wird. Auf einem zum Einstellerbolzen 110 parallelen, in der Gebrauchsstellung schräg hinter und unterhalb desselben angeordneten Lagerbolzen der vorderen Schwinge 105, im folgenden als Klinkenlagerbolzen 113 bezeichnet, ist eine Klinke 115 schwenkbar gelagert. In der Gebrauchsstellung des Fahrzeugsitzes 103 umgreift die Klinke 115 mit einem ersten Hakenmaul 117 von oben her einen ersten Verriegelungsbolzen 118, welcher parallel zum Einstellerbolzen 110 vom unteren Ende des Adaptionsteils 108 absteht, durch eine maulförmige Aussparung des Deckblechs 112 und der vorderen Schwinge 105 greift und in der Gebrauchsstellung unterhalb des Einstellerbolzens 110 angeordnet ist.

Auf dem Einstellerbolzen 110 sind zwischen der vorderen Schwinge 105 und dem Deckblech 112 ein Spannexzenter 123 und ein Fangelement 125 schwenkbar gelagert. In der Gebrauchsstellung des Fahrzeugsitzes 103 sichert der federbelastet an der Klinke 115 anliegende Spannexzenter 123 die Klinke 115 in der beschriebenen, schließenden Position. Das durch eine angreifende Zugfeder 126 zur Klinke 115 hin vorgespannte Fangelement 125 ist geringfügig zur Klinke 115 beabstandet angeordnet und stützt diese im Crashfall ab, so daß diese nicht öffnen kann. Ein Bowdenzug 127 ist als Betätigungselement an einem Mitnehmerbolzen 129 des Fangelementes 125 angebracht. Der Mitnehmerbolzen 129, welcher zugleich der Anbringung der Zugfeder 126 dient, nimmt beim Entriegeln nach einem gewissen Schwenkwinkel den Spannexzenter 123 über einen Finger des letzteren mit, so daß die Klinke 115 freigegeben wird.

Auf der beim Öffnen der Klinke 115 aus der beschriebenen, schließenden Position heraus voreilenden Seite, also auf der vom ersten Hakenmaul 117 abgewandten Seite, trägt die Klinke 115 ein zweites Hakenmaul 131. Das Adaptionsteil 108 weist im Bereich in Fahrtrichtung hinter dem Einstellerbolzen 110 einen zweiten Verriegelungsbolzen 132 auf, welcher durch eine kulissenförmige Aussparung des Deckblechs 112 ragt.

Zum Übergang von der Gebrauchsstellung in die Bodenstellung werden bei beiden Einstellern 101 durch Betätigung der Bowdenzüge 127 jeweils das Fangelement 125 und der Spannexzenter 123 zurückgeschwenkt und die Klinke 115 geschwenkt, und zwar in der Zeichnung im Uhrzeigersinn. Die Klinke 115 gibt dadurch den ersten Verriegelungsbolzen 118 frei.

Der als Viergelenk konzipierte Einsteller 101 kann nun flach geklappt werden, wobei die vordere Schwinge 105 in der Zeichnung gegen den Uhrzeigersinn nach vorne schwenkt und sich dadurch der erste Verriegelungsbolzen 118 des Adaptionsteils 108 von der Klinke 115 entfernt und zugleich die Klinke 115 sich dem zweiten Verriegelungsbolzen 132 nähert. In einer nicht näher dargestellten Zwischenstellung gelangt der zweite Verriegelungsbolzen 132 in Anlage an die Klinke 115 und drückt diese bei einer weiteren Schwenkbewegung des Einstellers 101 in Richtung ihrer ursprünglichen, schließenden Position, d.h. in der Zeichnung gegen den Uhrzeigersinn. Der zweite Verriegelungsbolzen 132 gelangt schließlich in das zweite Hakenmaul 131, womit der Einsteller 101 wieder verriegelt ist.

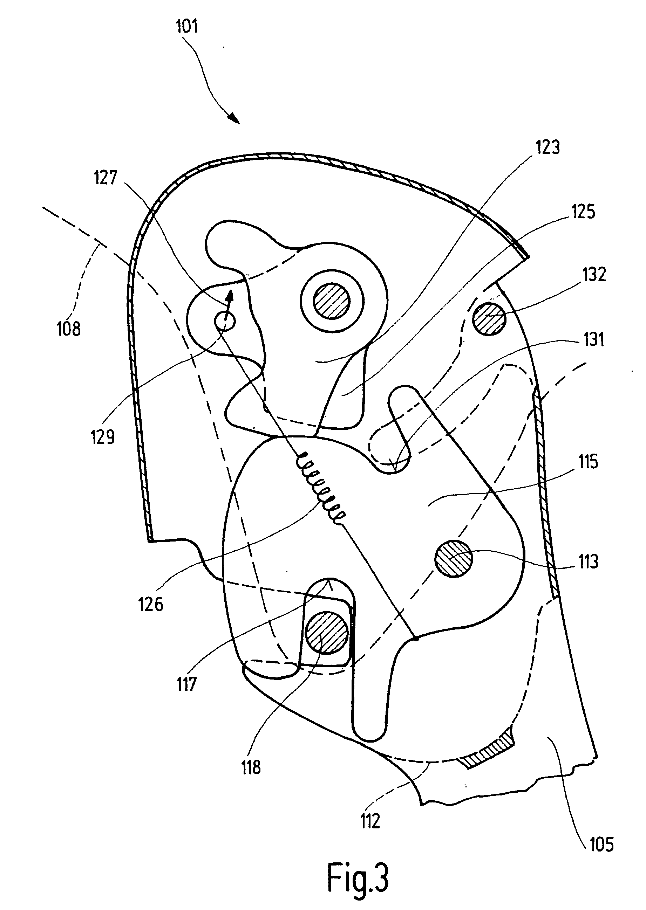

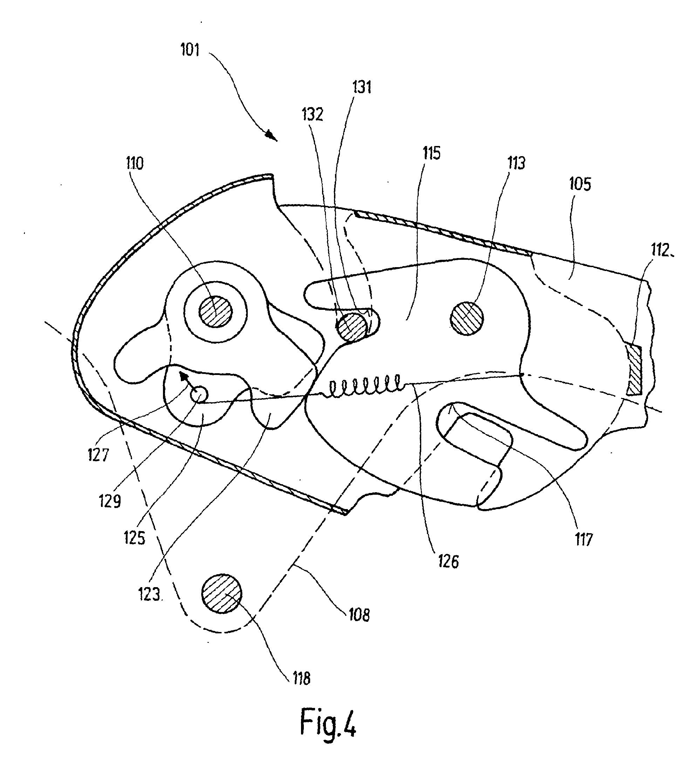

Wie in Fig. 4 dargestellt ist, nimmt die Klinke 115 in der Nichtgebrauchsstellung des Fahrzeugsitzes 103 wieder eine schließende Position ein, welche - in Bezug auf die vordere Schwinge 105 - mit der schließenden Position übereinstimmt, die in Fig. 3 für die Gebrauchsstellung dargestellt ist, so daß die Klinke 115 die gleichen Funktionen aufweist. Die Klinke 115 wird insbesondere wieder durch den Spannexzenter 123 und das Fangelement 125 als Sicherungselemente gesichert. Die gewählte Geometrie, d.h. die Abmessungen und Radien des zweiten Hakenmauls 131 und die Abstände zu den Schwenkachsen, sorgt dafür, daß die Klinke 115 in der Schwenkposition nicht durch ein Moment der Sicherungselemente geöffnet wird.

Die Rückkehr in die Gebrauchsstellung wird wiederum durch eine Betätigung der Bowdenzüge 127 eingeleitet, welche die Einsteller 101 in der beschriebenen Weise entriegeln. Beim Übergang des Einstellers 101 von der Stellung gemäß Fig. 4 zur Stellung gemäß Fig. 3 wird über den zweiten Verriegelungsbolzen 132 zunächst die von den Sicherungselementen 123 und 125 freigegebene Klinke 115 geöffnet und dann der zweite Verriegelungsbolzen 132 von der Klinke 115 freigegeben. Sobald der erste Verriegelungsbolzen 118 in Anlage an einen vorspringenden Lippenbereich des ersten Hakenmauls 117 gelangt, drückt er die Klinke 115 in der Zeichnung gegen den Uhrzeigersinn, so daß diese bei Erreichen der Gebrauchsstellung wieder ihre schließende Position einnimmt, in welcher das erstes Hakenmaul 117 den ersten Verriegelungsbolzen 118 umschließt und die Klinke 115 von den Sicherungselementen 123 und 125 gesichert wird.

Das zweite Ausführungsbeispiel gleicht dem ersten Ausführungsbeispiel weitgehend, weshalb gleiche und gleichwirkende Bauteile um 100 höhere Bezugszeichen tragen. Der Einsteller 201 ist als Tischklappbeschlag einer Rückenlehne 202 eines Fahrzeugsitzes 203 auf dessen beiden Seiten vorgesehen. Ein Rahmenlagerblech 205 als ein erstes Einstellerteil ist jeweils am Sitzrahmen 207 fest angebracht. Der Sitzrahmen 207 trägt wie zuvor mittels einer Sitzschale das nicht näher dargestellte Sitzkissen. An der Struktur der Rückenlehne 202 ist als zweites Einstellerteil ein Lehnenlagerblech 208 fest angebracht, welches am Rahmenlagerblech 205 mittels eines Einstellerbolzens 210 angelenkt ist.

Die Rückenlehne 202 ist mittels des Einstellers 201 zwischen einer aufrechten Gebrauchsstellung des Fahrzeugsitzes 203, welche zum Einsitzen geeignet ist, wobei durch einen in der Zeichnung nur angedeuteten Lehnenbeschlag zusätzlich eine Neigungseinstellung vorgenommen werden kann, und einer flachen Tischstellung als einer Nichtgebrauchsstellung des Fahrzeugsitzes 203, welche zum Beladen geeignet ist, klappbar.

Auf einem zum Einstellerbolzen 210 parallelen, unterhalb desselben angeordneten Lagerbolzen des Rahmenlagerblechs 205, im folgenden als Klinkenlagerbolzen 213 bezeichnet, ist eine Klinke 215 schwenkbar gelagert. In der Gebrauchsstellung umgreift die Klinke 215 mit einem ersten Hakenmaul 217 von oben her einen ersten Verriegelungsbolzen 218, welcher parallel zum Einstellerbolzen 210 vom Lehnenlagerblech 208 absteht und in der Gebrauchsstellung unterhalb des Einstellerbolzens 210 angeordnet ist.

Unterhalb des Klinkenlagerbolzens 213 steht ein hierzu paralleler Lagerbolzen, im folgenden als Exzenterlagerbolzen 221 bezeichnet, vom Rahmenlagerblech 205 ab. Auf diesem Exzenterlagerbolzen 221 sind ein Spannexzenter 223 und ein Fangelement 225 schwenkbar gelagert. In der Gebrauchsstellung sichert der federbelastet an der Klinke 215 anliegende Spannexzenter 223 die Klinke 215 in der beschriebenen, schließenden Position. Das durch eine angreifende Zugfeder 226 zur Klinke 215 hin vorgespannte Fangelement 225 ist geringfügig zur Klinke 215 beabstandet angeordnet und stützt diese im Crashfall ab, so daß diese nicht öffnen kann.

Mittels eines Bowdenzuges 227 steht ein schwenkbar auf dem Rahmenlagerblech 205 gelagerter Betätigungshebel 228, welcher als Betätigungselement dient, in Wirkverbindung mit einem Arm des Fangelementes 225. Das Fangelement 225 nimmt beim Entriegeln nach einem gewissen Schwenkwinkel den Spannexzenter 223 mit, um die die Klinke 215 freizugeben. Es kann ein einziger Betätigungshebel 228 vorgesehen sein, welcher über eine Welle auf beiden Seiten die Einsteller 201 entriegelt, oder jeder Einsteller 201 weist einen eigenen Betätigungshebel 228 auf.

Auf der beim Öffnen der Klinke 215 aus der beschriebenen, schließenden Position heraus voreilenden Seite, also auf der vom ersten Hakenmaul 217 abgewandten Seite, trägt die Klinke 215 ein zweites Hakenmaul 231. Das Lehnenlagerblech 208 weist im Bereich in Fahrtrichtung vor dem Einstellerbolzen 210 einen zweiten Verriegelungsbolzen 232 auf. Zum Übergang von der Gebrauchsstellung in die Tischstellung werden bei beiden Einstellern 201 durch Betätigung des Betätigungshebels 228 jeweils das Fangelement 225 und der Spannexzenter 223 zurückgeschwenkt und die Klinke 215 geschwenkt, und zwar in der Zeichnung gegen den Uhrzeigersinn. Die Klinke 215 gibt dadurch den ersten Verriegelungsbolzen 218 frei.

Die Rückenlehne 202 kann nun um den Einstellerbolzen 210 nach vorne geklappt werden, d.h. der Einsteller 201 schwenkt in der Zeichnung gegen den Uhrzeigersinn. Dadurch entfernt sich der erste Verriegelungsbolzen 218 von der Klinke 215, und zugleich nähert sich der zweite Verriegelungsbolzen 232 der Klinke 215. In einer nicht näher dargestellten Zwischenstellung gelangt der zweite Verriegelungsbolzen 232 in Anlage an einen vorspringenden Lippenbereich des zweiten Hakenmauls 231 der Klinke 215 und drückt diese bei einer weiteren Schwenkbewegung des Einstellers 201 in Richtung ihrer ursprünglichen, schließenden Position, d.h. in der Zeichnung im Uhrzeigersinn. Der zweite Verriegelungsbolzen 232 gelangt schließlich in das zweite Hakenmaul 231, womit der Einsteller 201 wieder verriegelt ist.

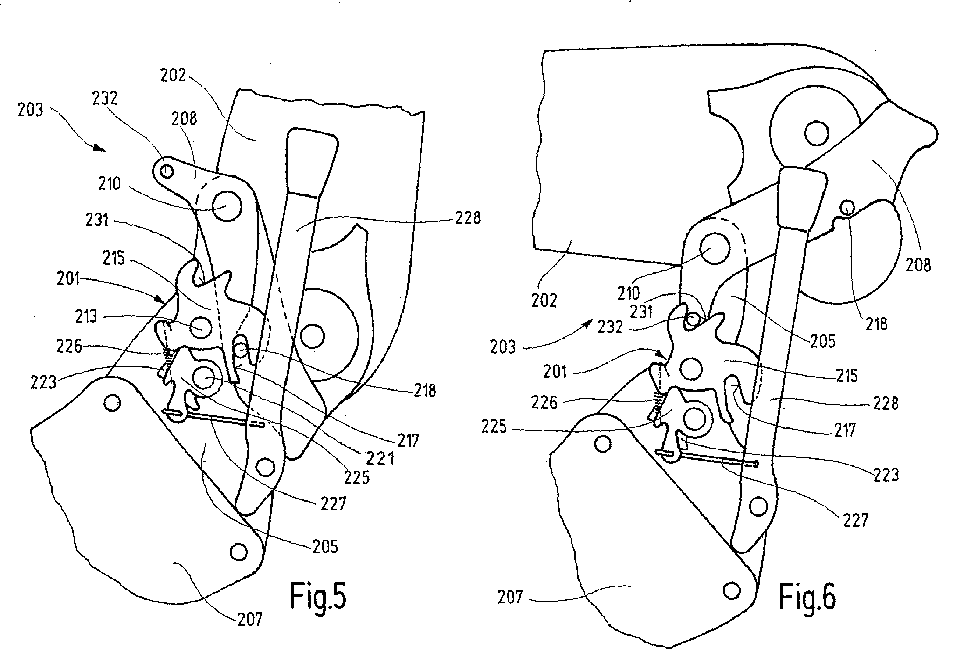

Wie in Fig. 6 dargestellt, nimmt die Klinke 215 in der Tischstellung wieder eine schließende Position ein, welche - in Bezug auf das Rahmenlagerblech 205 - mit der schließenden Position übereinstimmt, die in Fig. 5 für die Gebrauchsstellung dargestellt ist, so daß die Klinke 215 die gleichen Funktionen aufweist. Die Klinke 215 wird insbesondere wieder durch den Spannexzenter 223 und das Fangelement 225 als Sicherungselemente gesichert. Die Ausführungsbeispiele stimmen hierin völlig überein. Die gewählte Geometrie, d.h. die Abmessungen und Radien des zweiten Hakenmauls 231 und die Abstände zu den Schwenkachsen, sorgt dafür, daß die Klinke 215 in der Schwenkposition nicht durch ein Moment der Sicherungselemente geöffnet wird.

Die Rückkehr in die Gebrauchsstellung wird wiederum durch eine Betätigung des Betätigungshebels 228 eingeleitet, welcher die Einsteller 201 in der beschriebenen Weise entriegelt. Beim Übergang des Einstellers 201 von der Stellung gemäß Fig. 6 zur Stellung gemäß Fig. 5 wird über den zweiten Verriegelungsbolzen 232 zunächst die von den Sicherungselementen 223 und 225 freigegebene Klinke 215 geöffnet und dann der zweite Verriegelungsbolzen 232 von der Klinke 215 freigegeben. Sobald der erste Verriegelungsbolzen 218 in Anlage an einen vorspringenden Lippenbereich des ersten Hakenmauls 217 gelangt, drückt er die Klinke 215 in der Zeichnung im Uhrzeigersinn, so daß diese bei Erreichen der Gebrauchsstellung wieder ihre schließende Position einnimmt, in welcher das erste Hakenmaul 217 den ersten Verriegelungsbolzen 218 umschließt und die Klinke 215 von den Sicherungselementen 223 und 225 gesichert wird.

### Bezugszeichenliste

- 101, 201: Einsteller
- 103, 203: Fahrzeugsitz
- 104: Fußbereich
- 105: vordere Schwinge, erstes Einstellerteil
- 106: hintere Schwinge
- 107: Koppel
- 108: Adaptionsteil, zweites Einstellerteil
- 110, 210: Einstellerbolzen
- 112: Deckblech
- 113, 213: Klinkenlagerbolzen
- 115, 215: Klinke
- 117, 217: erstes Hakenmaul
- 118, 218: erster Verriegelungsbolzen, Verriegelungselement
- 123, 223: Spannexzenter
- 125, 225: Fangelement
- 126, 226: Zugfeder
- 127, 227: Bowdenzug, Betätigungselement
- 129: Mitnehmerbolzen
- 131, 231: zweites Hakenmaul
- 132, 232: zweiter Verriegelungsbolzen, Verriegelungselement
- 202: Rückenlehne
- 205: Rahmenlagerblech, erstes Einstellerteil
- 207: Sitzrahmen
- 208: Lehnenlagerblech, zweites Einstellerteil
- 221: Exzenterlagerbolzen
- 228: Betätigungshebel, Betätigungselement

## Patentansprüche

1. Einsteller für einen Fahrzeugsitz, insbesondere für einen Kraftfahrzeugsitz, mit einem ersten Einstellerteil (105; 205) und einem zweiten Einstellerteil (108; 208), welche relativ zueinander schwenkbar sind und mittels derer der Fahrzeugsitz (103; 203) zwischen wenigstens einer Gebrauchsstellung und wenigstens einer Nichtgebrauchsstellung überführbar ist, **dadurch gekennzeichnet, dass** am ersten Einstellerteil (105; 205) eine Klinke (115; 215) schwenkbar gelagert ist, welche zum Verriegeln des Einstellers (101; 201) mit wenigstens einem einzelnen Verriegelungselement (118, 132; 218, 232) des zweiten Einstellerteils (108; 208) zusammenwirkt, wobei die Klinke (115; 215) sowohl in der Gebrauchsstellung als auch in der Nichtgebrauchsstellung den Einsteller (101; 201) verriegelt und bezüglich des ersten Einstellerteils (105; 205) in derselben, schließenden Position angeordnet ist, **dadurch gekennzeichnet, dass** die Klinke (115; 225) zwei Mäuler (117, 131; 217, 231) zur Aufnahme wenigstens eines der Verriegelungselemente (118, 132; 218, 232) aufweist, welche bezüglich der Schwenkbewegung der Klinke (115; 215) in die gleiche Richtung geöffnet sind.

2. Einsteller nach Anspruch 1, **dadurch gekennzeichnet, dass** die Klinke (115; 215) sowohl in der Gebrauchsstellung als auch in der Nichtgebrauchsstellung durch dieselben Sicherungselemente (123, 125; 223, 225) gesichert ist.

3. Einsteller nach Anspruch 2, **dadurch gekennzeichnet, dass** als Sicherungselemente (123, 125; 223, 225) ein Spannexzenter (123; 223), der die Klinke (115; 215) in der schließende Position sichert durch federbelastete Anlage an der Klinke (115; 215), und ein Fangelement (125; 225) vorgesehen sind, das zur Klinke (115; 215) hin vorgespannt und geringfügig zur Klinke (115; 215) beabstandet angeordnet ist und diese im Crashfall abstützt, so dass diese nicht öffnen kann.

4. Einsteller nach einem der Ansprüche 1 bis 3, **dadurch gekennzeichnet, dass** der Einsteller (101; 201) sowohl ausgehend von der Gebrauchsstellung als auch ausgehend von der Nichtgebrauchsstellung durch dasselbe Betätigungselement (127; 228) entriegelt wird.

5. Einsteller nach einem der Ansprüche 1 bis 4, **dadurch gekennzeichnet, dass** am zweiten Einstellerteil (108; 208) zwei einzelne Verriegelungselemente (118, 132; 218, 232) zum Zusammenwirken mit der Klinke (115; 215) vorgesehen sind, von denen eines zum Verriegeln in der Gebrauchsstellung und das andere zum Verriegeln in der Nichtgebrauchsstellung mit der Klinke (115; 215) zusammenwirkt.

6. Einsteller nach einem der Ansprüche 1 bis 5, **dadurch gekennzeichnet, dass** die Mäuler (117, 131; 217, 231) bezüglich der Schwenkbewegung der Klinke (115; 215) auf unterschiedlichen Seiten der Klinke (115; 215) angeordnet sind, und dass die Verriegelungselemente (118, 132; 218, 232) als Bolzen ausgebildet sind.

7. Einsteller nach einem der Ansprüche 1 bis 6, **dadurch gekennzeichnet, dass** bei einem Wechsel der Stellung des Fahrzeugsitzes (103; 203) vor Erreichen der Gebrauchsstellung bzw. der Nichtgebrauchsstellung die Verriegelungselemente (118, 132; 218, 232) in Anlage an die Klinke (115; 215) gelangen und diese in ihre schließende Position bewegen.

8. Einsteller nach einem der Ansprüche 1 bis 7, **dadurch gekennzeichnet, dass** der Einsteller (101) ein Viergelenk (104, 105, 106, 107) aufweist, mittels dessen der Fahrzeugsitz (103) von einer einsitzbaren Gebrauchsstellung in eine flache Bodenstellung als Nichtgebrauchsstellung überführbar ist, wobei die Klinke (115) und die Verriegelungselemente (118, 132) zwischen einer Schwinge als erstem Einstellerteil (105) einerseits und einer Koppel (107) oder einem koppelfesten, zweiten Einstellerteil (108) wirksam sind.

9. Fahrzeugsitz mit einem Einsteller (101; 201) nach einem der Ansprüche 1 bis 8.

## Claims

1. Adjuster for a vehicle seat, in particular for a motor vehicle seat, having a first adjuster member (105; 205) and a second adjuster member (108; 208) which can be pivoted relative to each other and by means of which the vehicle seat (103; 203) can be moved between at least one position for use and at least one non-use position, **characterised in that** a detent (115; 215) is pivotably supported on the first adjuster member (105; 205) and co-operates with at least one individual locking element (118, 132; 218, 232) of the second adjuster member (108; 208) in order to lock the adjuster (101; 201), the detent (115; 215) locking the adjuster (101; 201) both in the position for use and in the non-use position and being arranged in the same closing position with respect to the first adjuster member (105; 205), **characterised in that** the detent (115; 225) has two mouths (117, 131; 217, 231) for receiving at least one of the locking elements (118, 132; 218, 232), which mouths are open in the same direction with respect to the pivoting movement of the detent (115; 215).

2. Adjuster according to claim 1, **characterised in that** the detent (115; 215) is secured by the same securing elements (123, 125; 223, 225) both in the position for use and in the non-use position.

3. Adjuster according to claim 2, **characterised in that** there are provided, as securing elements (123, 125; 223, 225), a locking cam (123; 223) which secures the detent (115; 215) in the closing position by resiliently loaded abutment against the detent (115; 215), and a catch element (125; 225) which is biased in the direction towards the detent (115; 215) and which is arranged with slight spacing relative to the detent (115; 215) and supports the detent in the event of a crash so that it cannot open.

4. Adjuster according to any one of claims 1 to 3, **characterised in that** the adjuster (101; 201) is unlocked by the same actuating element (127; 228) both starting from the position for use and starting from the non-use position.

5. Adjuster according to any one of claims 1 to 4, **characterised in that** two individual locking elements (118, 132; 218, 232) are provided on the second adjuster member (108; 208) in order to co-operate with the detent (115; 215), one of which co-operates with the detent (115; 215) in order to lock in the position for use and the other co-operates with the detent (115; 215) in order to lock in the non-use position.

6. Adjuster according to any one of claims 1 to 5, **characterised in that** the mouths (117, 131; 217, 231) are arranged at different sides of the detent (115; 215) relative to the pivoting movement of the detent (115; 215), and **in that** the locking elements (118, 132; 218, 232) are in the form of studs.

7. Adjuster according to any one of claims 1 to 6, **characterised in that**, in the event of the position of the vehicle seat (103; 203) being changed before the position for use or the non-use position is reached, the locking elements (118, 132; 218, 232) move into abutment against the detent (115; 215) and move it into the closing position thereof.

8. Adjuster according to any one of claims 1 to 7, **characterised in that** the adjuster (101) has a four-bar articulation (104, 105, 106, 107), by means of which the vehicle seat (103) can be changed from a usable position for use to a flat floor-like position as a non-use position, the detent (115) and the locking elements (118, 132) being active between a rocker member as a first adjuster member (105), on the one hand, and a coupling member (107) or a second adjuster member (108) which is secured to the coupling member.

9. Vehicle seat having an adjuster (101; 201) according to any one of claims 1 to 8.

## Revendications

1. Dispositif de réglage pour un siège de véhicule, en particulier pour un siège de véhicule automobile, comportant une première partie de dispositif de réglage (105 ; 205) et une deuxième partie de dispositif de réglage (108 ; 208), lesquelles sont aptes à pivoter l'une par rapport à l'autre et au moyen desquelles le siège de véhicule (103 ; 203) est apte à être transféré entre au moins une position d'utilisation et au moins une position de non-utilisation, **caractérisé par le fait que**, sur la première partie de dispositif de réglage (105 ; 205), est monté pivotant un cliquet (115 ; 215), lequel coopère pour le verrouillage du dispositif de réglage (101 ; 201) avec au moins un élément de verrouillage individuel (118, 132 ; 218, 232) de la deuxième partie de dispositif de réglage (108 ; 208), le cliquet (115 ; 215) verrouillant le dispositif de réglage (101 ; 201) non seulement dans la position d'utilisation mais encore dans la position de non-utilisation, et étant disposé relativement à la première partie de dispositif de réglage (105 ; 205) dans la même position de fermeture, **caractérisé par le fait que** le cliquet (115 ; 215) présente deux mâchoires (117, 131 ; 217, 231) pour recevoir au moins l'un des éléments de verrouillage (118, 132 ; 218, 232), lesquels sont ouverts dans la même direction relativement au mouvement de pivotement de cliquet (115 ; 215).

2. Dispositif de réglage selon la revendication 1, **caractérisé par le fait que** le cliquet (115 ; 215) est assuré non seulement dans la position d'utilisation mais encore dans la position de non-utilisation par les mêmes éléments de sécurité (123, 125 ; 223, 225).

3. Dispositif de réglage selon la revendication 2, **caractérisé par le fait que**, comme éléments de sécurité (123, 125 ; 223, 225), sont disposés un excentrique de tension (123 ; 223) qui assure le cliquet (115 ; 215) dans la position de fermeture par un appui chargé par ressort sur le cliquet (115 ; 215), et un élément d'arrêt (125 ; 225) qui est disposé précontraint par rapport au cliquet (115 ; 215) et à faible distance du cliquet (115 ; 215) et protège celui-ci en cas d'accident de façon que celui-ci ne puisse pas s'ouvrir.

4. Dispositif de réglage selon l'une des revendications 1 à 3, **caractérisé par le fait que** le dispositif de réglage est déverrouillé non seulement à partir de la position d'utilisation mais encore à partir de la position de non-utilisation par le même élément d'actionnement (127 ; 228).

5. Dispositif de réglage selon l'une des revendications 1 à 4, **caractérisé par le fait que**, sur la deuxième partie de dispositif de réglage (108, 208), sont disposés deux éléments de verrouillage individuels (118, 132 ; 218, 232) pour la coopération avec le cliquet (115 ; 215), dont l'un coopère avec le cliquet (115 ; 215) pour le verrouillage dans la position d'utilisation et l'autre, pour le verrouillage dans la position de non-utilisation.

6. Dispositif de réglage selon l'une des revendications 1 à 5, **caractérisé par le fait que** les mâchoires (117, 131 ; 217, 231) sont disposées relativement au mouvement de basculement du cliquet (115 ; 215) sur des côtés différents du cliquet (115 ; 215) et que les éléments de verrouillage (118, 132 ; 218, 232) sont réalisés sous la forme de boulons.

7. Dispositif de réglage selon l'une des revendications 1 à 6, **caractérisé par le fait que**, lors d'un changement de la position du siège de véhicule (103 ; 203) avant d'atteindre la position d'utilisation ou la position de non-utilisation, les éléments de verrouillage (118, 132 ; 218, 232) parviennent en appui sur le cliquet (115 ; 215) et déplacent celui-ci dans sa position de fermeture.

8. Dispositif de réglage selon l'une des revendications 1 à 7, **caractérisé par le fait que** le dispositif de réglage (101) présente un quadrilatère articulé (104, 105, 106, 107) au moyen duquel le siège du véhicule (103) est apte à être transféré d'une position d'utilisation permettant de s'asseoir dans une position de plancher plane en tant que position de non-utilisation, le cliquet (115) et les éléments de verrouillage (118, 132) étant actifs entre une manivelle basculante comme première partie de dispositif de réglage (105) d'une part et une bielle (107) ou une deuxième partie de dispositif de réglage (108) solidaire de la bielle.

9. Siège de véhicule comportant un dispositif de réglage (101 ; 201) tel que défini à l'une des revendications 1 à 8.
